# EUROPEAN PATENT SPECIFICATION

(11) **EP 1 068 125 B1**
(45) Date of publication and mention of the grant of the patent: **03.07.2002**
(21) Application number: 99910666.9
(22) Date of filing: 23.03.1999
(51) Int. Cl.: B62D 1/18

(54) **Road vehicle for transporting people and goods with variable weights displacement**
Strassenfahrzeug zum Transport von Personen oder Waren mit variabler Gewichtsverteilung
Véhicule routier de transport de personnes et de marchandises à déplacement variable des charges

(30) Priority: 24.03.1998 IT RM980185
(43) Date of publication of application: 17.01.2001
(73) Proprietor: Vigano', Giorgio, 00198 Roma (IT)
(72) Inventor: Vigano', Giorgio, 00198 Roma (IT)
(74) Representative: Mascioli, Alessandro
(86) International application number: IT9900067
(87) International publication number: WO9948745

(56) References cited:
- EP-A- 0 050 929
- DE-A- 2 113 770
- DE-A- 19 624 686

## Description

### BACKGROUND ART

Usually, in the traditional vehicles, the steering wheel has a fixed location on one side of the vehicle. -Therefore, also the driver's position is fixed on the left side or on the right side (England). -So, when the driver is alone, a weights unbalance originates in the vehicle.

The vehicles manufacturers partially obviate to this unbalance, by placing , on the opposite side, some heavy component, such as: the battery, the reservoir, the differential, pumps, alternators, ect. -It happens that, when the passenger is much more heavy than the driver, the weight unbalance is emphasized.

However, in a medium-size traditional vehicle that weights about 1.300 Kgs., the side position of the driver induces an unbalance of ab. 6/7 %, that is considerable only in extreme driving conditions.

But, in a small vehicle that weighs about 300 Kgs., if the driver is alone, he can induce an unbalance above 25%. -If in these conditions, the vehicle turns right with a sharp angle and a considerable speed, the inside wheels could rise.

On the matter are recalled:
- Patent DE-A-2 113 770, describing a commercial vehicle with pivoting driving seat to consent driving Forwards and backwards without turning the vehicle;
- Patent EP-A-0 050 929, with the aim to consent left or right hand drive.
- Patent GB-A-775 534 for weights balancing, but not foreseeing passengers' entrance from the front of the vehicle;
- Patent GB-A-883 130, with the aim to shift the driving wheel from one to the other side of the vehicle, with high elevation of steering wheel when in central position;
- PCT/IT 98/00359 (prior art pursuant to Article 54(3) EPC only), providing the basic Vehicle body-shell for the application of this invention and namely the front easy entrance;
- PCT/IT 99/00006 (prior art pursuant to Article 54(3) EPC only), consenting the performances and defining sizes and safety and functional aspects relating to the present invention.

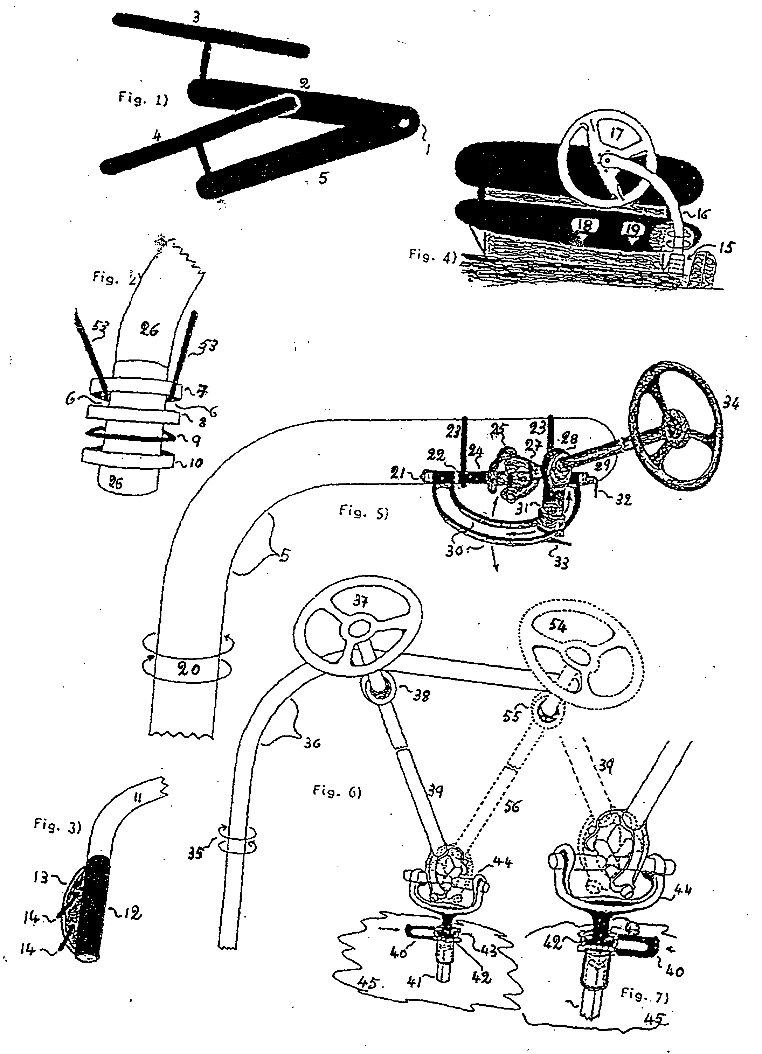

The invention is characterized by the features as set forth in claim 1, whereby:
a) a steering wheel vertical support situated permanently on one side of the vehicle (Fig.4,5,6) and rotating about the vertical axis of said vertical support by an angle wider than 90° degrees, thus enabling both:
   - the precise balancing of the Vehicle through the possibility of making micrometrical displacements of the driver's position between the center and a side of the vehicle;
   - totally clearing the front main entrance.

Further features of the invention are defined in the dependent claims.

### DISCLOSURE OF INVENTION

The innovations that are the object of this Industrial Invention as defined in claim 1, have the aim of eliminating the weights unbalance in a small vehicle, through the possibility of shifting the steering wheel and the driver's position, in order to reach a perfect balance, considering also the weights of passengers and goods.

For example, the driver can seat in the center, if he is alone; seat nor mally on the left, if he is accompanied, and, in any case, situate his position in the right place to balance the actual weiths of passengers and luggage. -For the right-hand-drive vehicles, everything is reverse.

The above is obtained by moving the support of the steering wheel, in order to place it right in front of the driver, wherever he could choose to sit, shifting sideway in the vehicle.

This is possible because, in a small vehicle where, in any case, the distance of the pedals from the seat must be anatomical, such distance is relatively long; therefore it allows that the lateral moves of the driver's position, induce a minimum displacement of the steering wheel as regards the pedals, that could be mesured in about 10° (degrees).

This limited displacement, that allows the balancing of weights, is prac tically irrelevant and more contained than in many vehicles circulating to day. -This displacement is felt even less, when the vehicle has a continuously variable transmission that, reducing pedals only to break and accelerator, allows to drive with one foot only.

Although unnecessary, it could be adopted a mechanism that turns pedals in correspondence with the moves of the steering set-up.

THE POSSIBILITY OF LATERAL SHIFTING OF THE DRIVER, THAT IS ACHIEVED THROUGH A SUITABLE CHANGE OF THE ANGLES OF THE STEERING WHEEL PLANE & SUPPORT IS THE PRINCIPAL ASPECT OF THIS INDUSTRIAL INVENTION, INDEPENDENTLY FROM THE MECHANISM ADOPTED.

The mechanisms shown below as examples in Figs. 1 to 7, can be used in the vehicle of this invention.

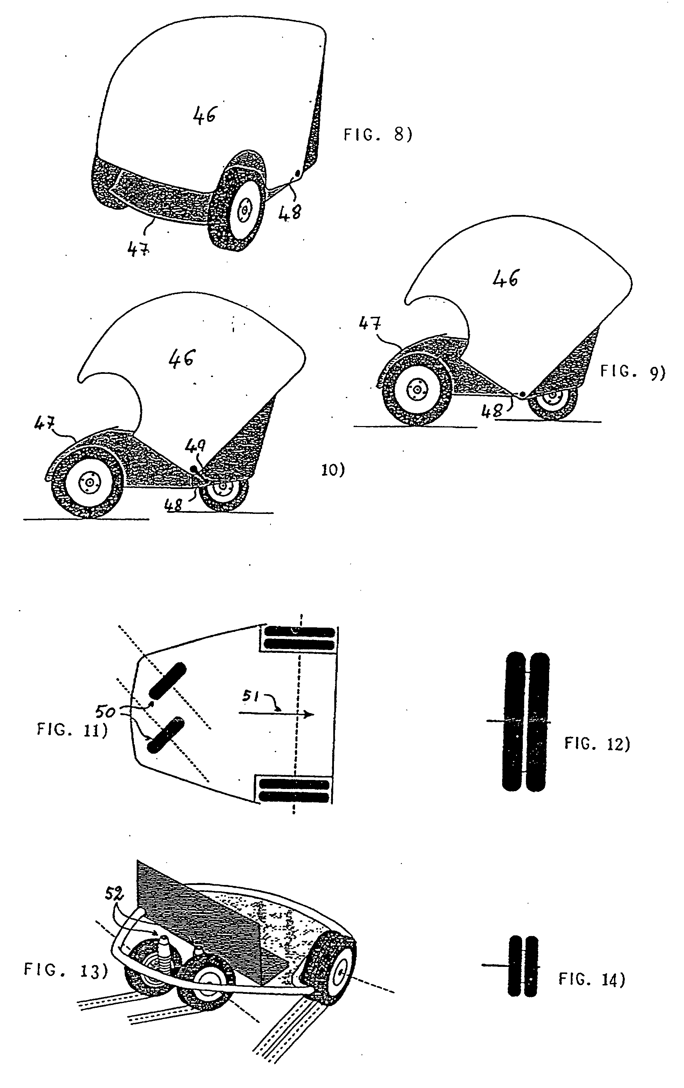

Figs. 8 to 14 do not form part of the present invention, but simply illustrate part of the above-mentioned co-pending applications PCT/IT 98/00359 and PCT/IT 99/00006.

The move of the steering wheel can be obtained in different ways, amongst them:
1) If the steering wheel column is set laterally as in FIG.1) & 4) of the attached Drawings table, - important part of this Invention - its rota tion for a few angle degrees, can achieve the centering of the steering wheel in front of the driver, in any point he may seat, comprised between the center and the lateral end of the vehicle. (left for Italy). FIG. 1) shows, with a projection from above, a lateral steering column pivoting on (1) that, at the end of an horizontal arm (2), bears the steering wheel (3).
   When the driver seats centrally on the bench seat, the steering column, pivoting on (1) moves the horizontal arm and the steering wheel, respectively to the positions (4) & (5), putting the steering wheel in a correct position in front of the driver.
   FIG.4) shows the same steering system as in FIG.1), but seen from the front of the vehicle. - N° (18) & (19) of FIG.4) show 2 possible positions that the driver can take. -The steering column (16) of FIG. 4) can turn clock-wise and viceversa, and can be locked/unlocked in (15) in order to correctly fix the steering wheel in front of the driver.
   This structure allows the rotation of the steering wheel and column, by an angle wider than 90° (ninety degrees); therefore, it is possible to totally free the access to the bench-seat, by shifting to the left side the whole steering set-up. -Also a handicapped person can then enter (backwards) the vehicle, while sitting on his wheel-chair, without help. The rotation and locking of the lateral steering column, can take place in several ways. -We describe herebelow some of them:
   ° FIG.2) shows 2 discs (8) & (10) separated by a suitable material (cork or else), - These discs are pressed by eccentric members (6), screws or else, suitable to lock/unlock the rotation of the steering column. FIG.2 shows the discs separately, for better understanding.
   ° Or, more simply, adopting, as in FIG.3) a sleeve (12) clutched around the steering column (11) by means of flaps (13) tightened by screws (14), eccentrics, or else.
2) FIG.5) shows an alternative mechanism that, through the adjustment of:
   a) the steering column support (5), turning as per (20);
   b) the rotation of the steering column (29) with the steering wheel (34), vertically in respect of the axle (25);
   c) the horizontal angle of the steering column (29), with the steering wheel (34);
   allows to achieve the best possible position of the steering wheel in front of the driver, in any place he would seat, on the left half of the bench-seat.
   The steering column (29) is connected to the steering axle (25), by means of an universal joint (27), that also allows the movements described at points b) and c) above.
   The knob (32) turns an axle that screws in the nut (21), thus tightening 2 crown wheels (22) positioned at both ends of the perforated bar (24). This allows to fix the two guides (30) at an angle that give the best vertical position to the steering column/wheel assembly, as regards the driver.
   The bearing (34) can be fixed in the wanted position by the knob (33) that, screwing in the inside of the bearing (31), bites the 2 guides (30), holding the ball bearing in the wanted position. -The ball joint (28) allows the steering wheel (34) to achieve the correct position.
   The bands (23) are conceived to reinforce the conjunction of the whole mechanism to the steering support (5).
   This kind of mechanism, as shown in FIG.5), allows, besides the possibility of giving to the steering wheel an infinite number of micrometric regulations, also the possibility of freeing easily and completely, the access to the bench seat, by rotating the steering column support (5) by more than 90 degrees.
   This is useful also for letting in handicapped people sitting on their wheel-chair, of course, after having removed part of the standard bench-seat.
3) Adopting a more traditional steering column FIG.6), integral part of this Invention, it can be actuated the side shifting of the steering wheel and, consequently, of the driver, also through a floor cardan joint (44).

Also through this mechanism, it is possible to achieve the weight balance; but it can be not equally functional for an use by handicapped people.

In FIG.6), the steering wheel (37) and relevant column (39) are facing the driver who seats on the left side, and transmits rotation to an axle situated at the floor level, through a cardan joint (44), or other type of flexible joint. -The steering column (37) is connected to the column (36) by a sliding ball joint. -When the driver, in order to establish the weights balance, has to shift laterally towards the centre of the vehicle, the steering wheel, sliding along the column (36), as in FIG.6), to the positions (54), (55) & (56), will place itself in the ideal position for the driver.

Also in this case, by fixing the column (36) with one of the mechanism in dicated in FIG. 2) & 3), and by fixing the ball-joint (38) along column (36) it is possible to choose practically endless angles and inclinations suitable to the driver and to the weights balance.

In the inferior part, the cardan joint (44) ends with a sleeve (42) that has on top a larger metal ring. -Said sleeve is engaged upon a vertical axle (41) suitably shaped, from which the rotation of the steering wheel is transmitted, through traditional mechanisms, to the steered wheels.

A sliding yoke (40) is inserted over the metal ring (43) of the sleeve (42), preventing the cardan joint (44) to sleep off from the axle (41).

The floor (45), through the hole (43), will make possible to slip off the cardan joint (44) from the axle (41), when the yoke (40) is moved back, as per drawings. -FIG. 7) shows an enlargement of FIG.6) including the cardan joint and its way of engaging/disengaging from the lower axle (41).

The disinsertion of the column (39) from axle (41), together with the rota tion of more than 90° (degrees) of the column (36), makes it possible to totally clear the access from the front, to the inside of the vehicle, with the exception of the two driving pedals.

This can be done, because the column (36), the steering wheel (37) and the column (39), through a rotation as per (35) can be set aside on the left (for the left-hand-drive vehicles) in such a position to occupy spaces not required for entering.

## Claims

1. Small & Light Road Vehicle weighing about 300 Kgs., for transportation of driver, passengers and luggage, **characterized by** a steering wheel vertical support situated permanently on one side of the Vehicle (15) and rotating about the vertical axis of said vertical support (20, 35), by an angle wider than 90° degrees; thus enabling:
a) the perfect balancing of the Vehicle, by pivoting the steering wheel vertical support to match the driver's position (18, 19), placed anywhere along the bench seat, and this without changing the driver's orientation and/ or the Vehicle's direction;
b) to turn the whole steering apparatus at the side of the Vehicle, so clearing totally the front main entrance.

2. Small & Light Vehicle as per Claim 1 above, where the driver can sit on the bench seat, on infinite intermediate positions, to establish always a perfect global balance; indispensable in a very small & light vehicle carrying driver and passengers in marginal conditions, in order to avoid turning upside down.

3. Light Vehicle as per Claims 1) and 2) above, **characterized by** the fact that, with the micrometric changes of the driver's position between the center and the side, the steering wheel height (17), on the bench seat, remains constant.

4. Light Vehicle, as per any of claims 1) to 3) above **characterized by** the fact that, turning the steering wheel vertical column by at least 90° degrees, it opens an entrance from the front of the Vehicle (51), large enough to let in an handicapped person sitting on her/his wheel chair.

5. Light Vehicle, as per any of Claims 1) to 4) above, **characterized by** the fact that the vertical pivoting steering column is fixed by a clutch system.

## Patentansprüche

1. Kleines,leichtes (300 kg) Straßenfahrzeug für den Transport von Fahrer, Passagieren und Gepäcks, das sich durch eine vertikale, permanent auf einer Seite des Fahrzeuges (15) positionierte Lenksäule auszeichnet, die um 90° um die vertikale Achse besagter vertikaler Lenksäule (20, 35) drehbar ist und auf diese Weise
a) den perfekten Ausgleich des Fahrzeuges durch Verstellen der vertikalen Lenksäule herstellt, um diese der Position (18, 19) des Fahrers anzupassen, unabhängig davon, an welcher Stelle des Sitzes er sich befindet, und zwar ohne die Orientierung des Fahrers und/oder die Fahrzeugrichtung zu ändern;
b) den gesamten Lenkapparat auf die Seite des Fahrzeuges zu drehen und damit den frontalen Zugang ganz freizumachen.

2. Kleines und leichtes Fahrzeug gemäß Anspruch 1, in dem der Fahrer zahlreiche Zwischenpositionen auf dem Sitz einnehmen kann, um stets einen einwandfreien Gesamtausgleich herzustellen, was bei einem kleinen und leichten Fahrzeug - wenn ein Kippen ausgeschlossen werden soll - unerläßlich ist, das Fahrer und Passagiere unter extremen Bedingungen transportiert.

3. Leichtes Fahrzeug gemäß den Ansprüchen 1 und 2, das sich durch die Tatsache auszeichnet, daß die Entfernung (17) der Lenkung vom Sitz - durch die mikrometrischen Veränderungen der Position des Fahrers zwischen Mitte und Seite - immer konstant bleibt.

4. Leichtes Fahrzeug gemäß jeder der Ansprüche 1 bis 3, das sich durch die Tatsache auszeichnet, daß durch die Drehung der vertikalen Lenksäule um 90° ein frontaler, ausreichend breiter Zugang zum Fahrzeug (51) frei wird, der einer behinderten Person erlaubt, sich auf ihren Rollstuhl zu setzen.

5. Leichtes Fahrzeug gemäß jeder der Ansprüche 1 bis 4, das sich durch die Tatsache auszeichnet, daß die drehbare Lenksäule über ein Kupplungssystem befestigt ist.

## Revendications

1. Véhicule routier petit et léger avec un poids d'environ 300 kg, destiné au transport du chauffeur, des passagers et des bagages, **caractérisé par** une colonne verticale de direction située en permanence d'un côté du véhicule (15) et pivotant autour de l'axe vertical de cette colonne verticale (20,35) suivant un angle d'environ 90 degrés, ce qui permet de:
a) équilibrer parfaitement le véhicule, en déplaçant la colonne verticale de direction pour l'adapter à la position (18, 19) du chauffeur, qui se trouve en n'importe quel point du siège et ceci sans modifier l'orientation du chauffeur et/ou la direction du véhicule
b) faire tourner tout le système de direction prévu à un côté du véhicule, de façon à libérer complètement l'accès frontal

2. Véhicule petit et léger suivant la revendication 1, qui permet au chauffeur d'être assis sur le siège en des positions intermédiaires infinies, pour créer toujours un balancement global parfait; indispensable pour un véhicule très petit et léger comprenant le chauffeur et les passagers en des conditions extrêmes, dans le but d'éviter le renversement.

3. Vehicule léger suivant les revendications 1 et 2, **caractérisé** du fait que, suite aux modifications micrométriques de la position du chauffeur entre le centre et le côté, la distance (17) de la direction du siège reste constante

4. Véhicule léger suivant chacune des revendications de 1 à 3, **caractérisé** du fait qu'en pivotant la colonne verticale de direction de 90 degrés au moins, un accès frontal du véhicule s'ouvre (51) qui est suffisamment large pour permettre à un handicapé de rester assis sur son fauteuil roulant.

5. Véhicule léger suivant chacune des revendications de 1 à 4, **caractérisé** du fait que la colonne verticale pivotante de la direction est fixée par un système à embrayage.
